# EUROPEAN PATENT SPECIFICATION

(11) **EP 3 988 622 B1**
(45) Date of publication and mention of the grant of the patent: **21.06.2023**
(21) Application number: 20306280.7
(22) Date of filing: 26.10.2020
(51) Int. Cl.: C09D 11/16, C09D 11/17

(54) **PEELABLE INK COMPOSITION FOR POROUS SUBSTRATES**
ABZIEHBARE TINTENZUSAMMENSETZUNG FÜR PORÖSE SUBSTRATE
COMPOSITION D'ENCRE PELABLE POUR SUBSTRATS POREUX

(43) Date of publication of application: 27.04.2022
(73) Proprietor: Société BIC, 92110 Clichy (FR)
(72) Inventor: BETHOUART, Carine, 62152 NEUFCHATEL HARDELOT (FR); BASSET, Aurélie, 62100 CALAIS (FR)
(74) Representative: Cabinet Beau de Loménie

(56) References cited:
- EP-B1- 0 556 668
- WO-A1-94/10251
- JP-A- 2003 221 542
- US-A- 5 389 717
- US-A1- 2006 069 183

## Description

The present invention concerns an aqueous peelable ink composition, more specifically a writing ink composition, in particular for porous substrates. The invention also concerns a method for preparing such an aqueous peelable ink composition. A writing instrument comprising such an aqueous peelable ink composition and a method for writing on a porous substrate are also part of the invention. Finally, the invention concerns a porous substrate coated with an aqueous peelable ink composition according to the invention. The aqueous peelable ink composition of the invention includes at least two film-forming elastomeric polymers wherein the first film-forming elastomeric polymer is hydrogenated acrylonitrile butadiene rubber (HNBR), and wherein the second film-forming elastomeric polymer is styrene butadiene rubber (SBR) and one or more pigments dispersed in water. When the ink composition is applied to porous substrates, the water evaporates and the polymers provide a coalesced residue on the surface of the substrate. The ink composition is peelable in that the residue can be removed from the surface of the substrate, preferably paper surface, for some period of time after formation without leaving a visible residue or damaging the substrate. Hence, the initial color (first color) of the ink composition after writing on a substrate can be removed by peeling, and the written mark changes into a second color. Preferably, the first and second colors are different which means that they can be distinguished from each other by the human eye. The ink composition of the invention is particularly suitable for use with writing porous substrates (also named porous surfaces) made, basically, of pressed, matted fibers, like paper or cardboard. The aqueous peelable ink composition of the invention is also storage-stable, easy to manufacture, and easy to apply.

The ink composition of the invention preferably has a low viscosity, preferably a viscosity ranging from 3 to 10 mPa.s, more preferably ranging from 3 to 7 mPa.s, and as a result is particularly suitable for use with standard felt-tip markers that rely on a capillary feed system to draw ink from a reservoir. Thus, the ink composition of the invention is suitable for use in felt-pens, highlighters, markers, which typically use colored pigments. One significant advantage to using the ink composition of the invention in markers is that when textbook pages are highlighted, the highlighted portions can be erased later when the book is used by another reader.

Furthermore, the ink composition of the invention can be included in one single writing instrument. This allows having multiple color options within the same color mark, for example when the user takes notes, journal or draws to emphasize information or to make things stand out, which allows the user not to use multiple writing instruments.

Aqueous erasable writing ink compositions are known in the art such as in EP0556668B1 or JP03027484B2. Said aqueous ink compositions contain a film-forming elastomeric polymer and colorant. However, with this kind of erasable writing ink compositions, erasability may be difficult after a long period of time, and is thus sometimes not satisfactory. Furthermore, the peelability of the ink compositions of the prior art requires significantly high pressure to obtain a good color-changing. In addition, the colors obtained with the ink compositions of the prior art are generally not very vivid.

Color-changing ink compositions capable of changing the color of the ink by an eraser are known in the art such as in JP2002265843A or EP2977416B1. Said color-changing ink compositions contain a watersoluble resin, as well as pigment and dye. However, with this kind of color-changing ink compositions, peelability may be difficult after a long period of time, and is thus sometimes not satisfactory. Furthermore, the peelability of the ink compositions of the prior art requires significantly high pressure to obtain a good color-changing. In addition, the colors obtained with the ink compositions of the prior art are generally not very vivid.

Therefore, there is a need to find a new aqueous erasable ink composition, more specifically a new erasable writing ink composition, enabling to obtain a good deposit which has, in particular, a satisfactory color intensity (vividness), a good peelability by mechanical action particularly when used on porous substrates, preferably while avoiding an unwanted color loss due to a change in temperature and/or an unwanted color return. However, a minimum pressure shall be advantageously required in order to avoid involuntarily removal of the written mark, in particular for left-handed. In particular, efficient peelability of the written mark shall enable efficient removal of the initial color after peeling which means that the initial color is efficiently removed after peeling.

The inventors have surprisingly found that the use of hydrogenated acrylonitrile butadiene rubber (HNBR) as a first film-forming elastomeric polymer (a) in combination with styrene butadiene rubber (SBR) as a second film-forming elastomeric polymer (b), in combination with at least one pigment (c) dispersed in water (d), can resolve the above-mentioned problem. The peelable ink composition of the invention also presents the advantage of being peelable with fingers, thus using less waste than with conventional erasers. Furthermore, the aqueous peelable ink composition of the invention also presents the advantage of enabling a change of color, in particular by applying a low pressure (by the user).

In addition, the aqueous peelable ink composition of the invention enables obtaining vivid colors of written marks once applied, especially on porous substrates, in particular the initial color as well as the second color (after peeling) are vivid. An additional advantage of the invention is the possibility to obtain an aqueous peelable ink composition with color-changing having a good cap-off time. The term "cap-off" designates the ability of the ink composition of the invention with color-changing of not drying up in the writing instrument, which means in particular that the writing instrument can be left open for longer period of time, preferably one hour or even several hours, or even more than one day according to some embodiment, in particular with removed cap, without drying up.

Hereinafter, a detailed description of the present invention will be given. The specific embodiments are meant better illustrate the present invention, however, it should be understood that the present invention is not limited to these specific embodiments.

In the sense of the present invention, the expression "comprising a" should be understood as being synonymous with "comprising at least one".

In the sense of the present invention, the expressions "between ... and ..." or "ranging from ... to ..." should be understood as including the values of the limits.

For the purposes of the present invention, the term "erasable ink" or "peelable ink" is intended to mean any ink which can be peeled (or rubbed) after writing, preferably by the use of a finger or a friction body wherein the friction body can be an eraser or a tissue. The written mark obtained, in particular on cellulosic fibers paper such as paper (printer paper for example) and cardboard, by this ink can therefore be peeled just after writing such as less than 10 seconds after writing, even a few days after writing, and also even one month after writing, in particular to change the initial color of the writing in another color (second color).

Hence, once applied the written mark made with the ink composition according to the invention can be erased by peeling (or rubbing) or alternatively its initial color (first color) can be changed into another color (second color). Therefore, according to a first specific embodiment of the invention, the ink composition of the invention is erasable. According to a second specific embodiment of the invention, the ink composition of the invention is peelable from a first color into a second color, which is advantageously different from the first color. Advantageously, according to this second embodiment, the initial color, as well as the second color (after peeling), are vivid. For the purposes of the present invention, the term "erasable" or "peelable" should be understood as any written mark which can be peeled and/or rubbed after writing, preferably by the use of a finger or a friction body wherein the friction body can be an eraser or a tissue.

For the purposes of the present invention, the term "porous substrate" is intended to mean substrate that contains pores. The porous substrates have empty spaces or pores that allow external matter, like ink, to penetrate into the substrate.

Advantageously, the roughness of the substrate can be defined by its air permeability and measured by the standard ISO 8791 (unit: mL.min⁻¹). In a preferred embodiment, the air permeability of the porous substrate of the invention ranges from 50 to 1,000 mL.min⁻¹, preferably from 60 to 400 mL.min⁻¹, and more preferably from 80 to 280 mL.min⁻¹.

In particular, the porous substrate is chosen among porous substrate comprising cellulosic fibers such as paper, printer paper, or cardboard.

The ink composition according to the present invention is advantageously irreversibly erased. It is therefore an irreversible peelable ink composition. According to a preferred embodiment, the ink composition is an irreversible peelable color-changing ink composition. The term "color-changing ink" is intended to mean that once the color has changed, it is not possible to change it again, and in particular it is not possible to go back to the initial color (first color).

The ink composition according to the present invention is more specifically a writing ink. For the purposes of the present invention, the term "writing ink" is intended to mean any ink which is intended to be used in a writing instrument, and in particular in a felt-pen, a highlighter, a marker. A writing ink should not be confused with a printing ink which is used in printing machines and which does not have the same technical constraints, and thus the same specifications. Indeed, a writing ink must not contain solid particles of which the size is greater than the channels of the writing instrument, in order to avoid blocking them, which would inevitably lead to writing being irreversibly stopped. It must also dry sufficiently rapidly to avoid smudging the writing medium. It must also avoid the problems of migration (bleeding) over time. Thus, the ink composition according to the present invention will be suitable for the writing instrument for which it is intended.

The present invention therefore concerns an ink composition for porous substrates comprising:
(a) at least a first film-forming elastomeric polymer,
(b) at least a second film-forming elastomer polymer, and
(c) at least one pigment,
(d) water,
wherein the first film-forming elastomeric polymer (a) is hydrogenated acrylonitrile butadiene rubber (HNBR), and wherein the second film-forming elastomeric polymer (b) is styrene butadiene rubber (SBR).

In the sense of the invention, "film-forming" means a polymer capable of forming, by itself a macroscopically continuous film on a substrate, in particular on a porous substrate, and preferably a cohesive film.

Advantageously, the ink composition according to the invention is an aqueous ink composition, in particular an aqueous peelable ink composition.

In the sense of the invention, "elastomeric" means a polymer that displays rubber-like elasticity, i.e. a deformable, flexible polymer which has viscoelastic properties.

In the sense of the invention, a "polymer" is a compound (in particular a large molecule or a macromolecule) corresponding to the repetition of one or more units (these units being derived from compounds called monomers), and in particular the repetition of at least two repeating units, and preferably at least ten repeating units.

The film-forming elastomeric polymers (a) and (b) allow the fixation of the ink composition of the invention on the paper, and therefore avoid the written mark (deposit) of the ink to be peeled (i.e. removed) by simply brushing it with another sheet of paper while being erasable or while being able to change its initial color (first color) to another one (second color) (when a colorant is also present in the ink composition of the invention) by peeling with a friction body. The first film-forming elastomeric polymer (a) of the invention is hydrogenated acrylonitrile butadiene rubber (HNBR), for example commercially available under the name Zetpol^{®} 2230LX (Zeon Corporation), Therban^{®} (Brenntag), as well as mixtures thereof. The second film-forming elastomeric polymer (b) of the invention is styrene butadiene rubber (SBR), for example commercially available under the name Europrene^{®} Latice 084 (Versalis), Europrene^{®} Latice B010 (Versalis).

Advantageously, the weight ratio of the at least first film-forming elastomeric polymer (a) / the at least second film-forming elastomeric polymer (b), in particular of the hydrogenated butadiene rubber (HNBR) / the styrene butadiene rubber (SBR) is ranging from 1:5 to 5:1, in particular a weight ratio from 1:4 to 3:1.

In some embodiment, the film-forming elastomeric polymer (a) may represent at least 8% by weight, preferably at least 12% by weight, more preferably at least 16% by weight, and even more preferably at least 20% by weight, relative to the total weight of the ink composition. In a preferred embodiment, the content of film-forming elastomeric polymer (a) ranges from 8 to 36% by weight, and more preferably from 12 to 32% by weight, relative to the total weight of the ink composition.

Advantageously, the total content of film-forming elastomeric polymers ((a) +(b)) represent at least 8% by weight, preferably at least 12% by weight, more preferably at least 16% by weight, relative to the total weight of the ink composition.

In a preferred embodiment, the total content of film-forming elastomeric polymers ranges from 8 to 36% by weight, and more preferably from 12 to 32% by weight, even more preferably 12 to 25% by weight, relative to the total weight of the ink composition.

Advantageously, the total content of the film-forming elastomeric polymer (b) ranges from 3 to 25% by weight, preferably ranges from 6 to 20% by weight, relative to the total weight of the ink composition.

According to another embodiment, the ink composition, in particular the aqueous peelable ink composition, may further comprise at least one third film-forming elastomeric polymer.

The ink composition, in particular the aqueous peelable ink composition, of the present invention further comprises a pigment (c) which gives the color to the ink composition. The term "pigment" should be understood as meaning white or colored, mineral or organic particles of any form, which are insoluble in the medium in which they are solubilized, and which are intended to color the ink composition once applied on a porous substrate before peeling. The pigments (c) are also generally contained in a dispersion, where the grinding down or particle size reduction is accompanied by appropriate dispersants to achieve stable dispersions. The pigment (c) is preferably a pigment dispersion, more preferably chosen in the group consisting of pigment black 7 (such as Flexiverse III black 7 by SunChemical^{®}), pigment blue 15:3 (such as APE FRE BL 15:3 DISP by SunChemical^{®}), pigment red (such as Pigment red 210 by SunChemical^{®}), pigment green 7 (such as Sunsperse Eco green, Flexiverse FD Green, Flexiverse Green 7, Flexiverse HC GRN 7 by SunChemical^{®}), and mixtures thereof. In a preferred embodiment, the pigment (b) is chosen in the group consisting of pigment black 7 (such as Flexiverse III black 7 by SunChemical^{®}), pigment blue 15:3 (such as APE FRE BL 15:3 DISP by SunChemical^{®}), and mixtures thereof.

The pigment (c) is preferably a pigment dispersion, more preferably chosen in the group consisting of pigment violet 23 (such as Cellusperse^{®} A Violet 4 BP by SunChemical^{®}), pigment yellow 74 (such as FG Yellow 1SL by SunChemical^{®}).

According to a preferred embodiment, the diameter of the pigment in a pigment dispersion is less than 1 µm, and preferably less than 0.7 µm.

Advantageously, the content of pigment dispersion (c) ranges from 0.1 to 10% by weight, and preferably from 0.5 to 9% by weight, and more preferably from 0.5 to 7% by weight, relative to the total weight of the ink composition.

Advantageously, the content of pigment (c) ranges from 10 to 50% by weight, preferably from 30 to 50% by weight, preferably from 35 to 45% by weight, and more preferably from 38 to 45%, relative to the total weight of the pigment dispersion.

The ink composition, in particular the aqueous peelable ink composition, of the invention may further comprise at least one dye, in particular a mixture of dyes, solubilized in water. According to this specific embodiment, the ink composition of the invention is color-changing, which means that a written mark made with the ink composition of the invention can change from a first color into a second color by mechanical action (i.e. by peeling the first color).

The term "dyes" should be understood as meaning colored, mineral or organic particles of any form, which are soluble in the medium in which they are solubilized, and which are intended to color the ink composition once applied on a porous substrate after peeling. The presence of a dye in the ink composition of the invention allows a change of the initial color of the writing in another color by peeling with a finger or a friction body. The dye may be chosen for example in the group consisting of direct dyes (for example C.I direct black 17, 19, 22, 32, 38, 51, 71; C.I direct yellow 4, 26, 44, 50; C.I direct red 1, 4, 23, 31, 37, 39, 75, 80, 81, 83, 225, 226, 227; C.I direct blue 1, 15, 41, 71, 86, 87, 106, 108, 199, and the like), acid dyes (for example C.I acid black 1, 2, 24, 26, 31, 52, 107, 109, 110, 119, 154; C.I acid yellow 1, 7, 17, 19, 23, 25, 29, 38, 42, 49, 61, 72, 78, 110, 127, 135, 141, 142; C.I acid red 8, 9, 14, 18, 26, 27, 33, 35, 37, 51, 52, 57, 82, 83, 87, 92, 94, 111, 129, 131, 138, 186, 249, 254, 265, 276; C.I acid violet 15, 17, 49; C.I acid blue 1, 3, 7, 9, 15, 22, 23, 25, 40, 41, 43, 62, 78, 83, 90, 93, 100, 103, 104, 112, 113, 158; C.I acid green 3, 9, 16, 25, 27; C.I acid orange 56, and the like), food dyes (such as C.I. food yellow 3, and the like), Malachite green (C.I 4200) Victoria blue FB (C.I. 44045) methyl violet FN (C.I. 42535), rhodamine F4G (C.I. 45160), and rhodamine 6GCP (C.I 45160), and mixtures thereof.

When present, the content of the dye(s) may range from 0.1 to 10% by weight, advantageously from 0.2 to 8% by weight, and more advantageously from 0.3 to 5% by weight, by weight relative to the total weight of the ink composition.

The ink composition, in particular the aqueous peelable ink composition, of the invention also contains water (d) as the solvent.

Advantageously, the content of water (d) in the ink composition , in particular the aqueous peelable ink composition, of the invention ranges from 10 to 80% by weight, more advantageously from 10 to 70% by weight, and even more advantageously from 10 to 60% by weight, in particular from 20 to 60% by weight, relative to the total weight of the ink composition.

The ink composition, in particular the aqueous peelable ink composition, of the invention may also contain at least one release agent. The release agent of the invention is free of silicone, and is advantageously a polyoxyethylene sorbitan ester, more advantageously a polyoxyethylene sorbitan fatty acid ester, even more advantageously a polyoxyethylene sorbitan fatty acid ester with a chain of fatty acid in C₅-C₂₅, and even more advantageously a polyoxyethylene sorbitan fatty acid ester with a chain of fatty acid in C₈-C₁₆. In a particularly preferred embodiment, the release agent of the invention is a polyoxyethylene sorbitan monolaurate. The polyoxyethylene sorbitan ester comprises repeating units of ethylene oxide, preferably at least 20 repeating units of ethylene oxide. In a particularly preferred embodiment, the polyoxyethylene sorbitan monolaurate has a weight average molecular weight M_{w} ranging from 800 to 2,000 g.mol⁻¹, more advantageously from 1,000 to 1,500 g.mol⁻¹, and even more advantageously of 1,300 g.mol⁻¹, measured by Gel Permeation Chromatography (GPC).

Advantageously, the content of release agent in the ink composition, in particular the aqueous peelable ink composition, of the invention ranges from 0.1 to 5% by weight, more advantageously from 0.1 to 3% by weight, and even more advantageously from 0.2 to 3% by weight, relative to the total weight of the ink composition.

The ink composition, in particular the aqueous peelable ink composition, of the invention may further contain at least one plasticizer. The plasticizer of the invention is chosen in the group consisting of alcohols, preferably glycerin, benzoate esters, diisobutyrate esters such as trimethyl pentanyl diisobutyrate, and mixtures thereof, and more preferably glycerin, benzoate esters, and mixtures thereof, still more preferably glycerin. According to a preferred embodiment, the ink composition, in particular the aqueous peelable ink composition, of the invention comprises as plasticizer a mixture of at least one ester and at least one alcohol, wherein the at least one alcohol preferably has a boiling point higher than 160°C, and more preferably is glycerin (boiling point: 290°C).

Advantageously, the content of plasticizer in the ink composition, in particular the aqueous peelable ink composition, of the invention ranges from 1 to 25% by weight, and more advantageously from 8 to 20% by weight, relative to the total weight of the ink composition.

Advantageously, the presence of alcohol such as glycerin lets to improve the cap-off time of the composition.

According to an advantageously embodiment, the ink composition, in particular the aqueous peelable ink composition, further comprises urea and/or urea derivative(s) and mixtures thereof.

More specifically, the addition of such compound(s) can be used to improve the cap-off the composition, in particular when used in addition to alcohol such as glycerin.

Advantageously, the total content of urea and/or urea derivative(s) ranges from 1 to 25% by weight, and more advantageously ranges from 8 to 20% by weight, relative to the total weight of the ink composition.

In particular, the urea derivative(s) may be chosen among alkylene urea derivative(s) and/or thio urea derivative(s) and mixtures thereof, more specifically the urea derivative(s) may be chosen among ethylene urea, propylene urea, thio urea and mixtures thereof.

In particular, urea and/or urea derivative(s) may be used alone or as a mixture of two or more thereof.

Advantageously, the ink composition, in particular the aqueous peelable ink composition, of the invention comprises at least one first plasticizer and at least urea and/or urea derivative(s), advantageously the first plasticizer comprising glycerin.

The aqueous ink composition, in particular the aqueous peelable ink composition, according to the present invention may further comprise additional additive(s) known by the skilled person to be usable in aqueous ink compositions, advantageously selected in the group consisting of antimicrobial agents, antifungal agents, dispersing agents, wetting agents, pH regulators, and mixtures thereof.

Advantageously, the content of additional additive(s) in the ink composition of the invention ranges from 0.1 to 30% by weight, more advantageously from 0.1 to 20% by weight, and even more advantageously from 0.1 to 10% by weight, relative to the total weight of the ink composition.

The aqueous ink composition, in particular the aqueous peelable ink composition, of the invention may advantageously contain at least one antimicrobial agent such as methyl paraben, phenoxyethanol, isothiazolinone, 1,2-benzoisothiazolin-3-one, 2-methyl-4-isothiazolin-3-one, and mixtures thereof.

Advantageously, the antimicrobial agent is present in the aqueous ink composition, in particular the aqueous peelable ink composition, of the invention in a content ranging from 0.1 to 5% by weight, and more advantageously from 0.1 to 2% by weight, relative to the total weight of the ink composition.

The aqueous ink composition, in particular the aqueous peelable ink composition, according to the present invention may also contain a pH regulator, preferably chosen in the group consisting of ammonia, urea, monoethanolamine, diethanolamine, triethanolamine, alkali metal salts of phosphoric acid such as tripolyphosphate, sodium carbonate and hydroxides of alkali metals such as sodium hydroxide, still more preferably it is urea.

The ink composition according to the present invention is peelable, advantageously by peeling such as by mechanical friction, in particular by the use of a finger or a friction body wherein the friction body is an eraser or a tissue. The ink composition of the invention is therefore peelable by the use of the heat generated by the friction of the finger or the eraser.

Advantageously, the eraser used as a friction body may be chosen in the group consisting of ethylene-propylene-diene monomer (EPDM) rubber, Vulcanized Thermoplastic Elastomer (TPV) which is a blend of ethylene-propylene-diene monomer (EPDM) rubber and polypropylene (PP), ethylene-propylene rubber (EPR), poly(styrene-butadiene-styrene) (SBS), styrene ethylene butylene styrene (SEBS), natural rubber (NR), polyisoprene (IR), polyvinyl chloride, styrene-based thermoplastic elastomers including styrene-butadiene-styrene (SBS), styrene-ethylene-butylene-styrene (SEBS), styrene-ethylene-propylene-styrene (SEPS), styrene-ethylene-ethylene-propylene-styrene (SEEPS), polyether based polyurethane (PTU), and mixtures thereof.

Advantageously, the tissue used as a friction body may be chosen in the group consisting of cotton fabric, synthetic fabric and leather fabric, and more advantageously cotton fabric.

The ink composition, in particular the aqueous peelable ink composition, according to the present invention has advantageously a viscosity of 3 to 10 mPa.s, and more advantageously of 3 to 7 mPa.s, measured at 20°C with a Shell Cup # 1 marketed by NORCROSS^{®} Corporation. When the viscosity is less than 3 mPa.s, the pigment particles may settle more rapidly in the composition with a risk of ink leakage. Furthermore, when the viscosity is higher than 10 mPa.s, the flow rate of the ink composition is too low and any line was not written.

The present invention also concerns a method for preparing an ink composition, in particular an aqueous peelable ink composition, according to the invention, comprising the steps of:
(i) under stirring, adding the at least first film-forming elastomeric polymer (a) and the at least second film-forming elastomeric polymer (b), and the optional dye, to water (d),
(ii) under stirring, adding the at least one pigment (c), and the optional at least one release agent and the optional at least one plasticizer, to the mixture obtained in step (i), and
(iii) under stirring, adding the optional additives to the mixture obtained in step (ii).

The first film-forming elastomeric polymer (a), the second film-forming elastomeric polymer (b), the pigment (c), water (d), as well as the optional release agent, dye, plasticizer and additive(s), are as defined above for the ink composition, in particular the aqueous peelable ink composition, according to the invention.

During steps (i), (ii) and (iii), the ink ingredients are mixed under stirring at room temperature (20°C), advantageously at a stirring speed ranging from 200 to 700 rpm, and more advantageously at a stirring speed of 500 rpm.

The ink composition obtained in steps (i), (ii) and (iii) can be homogenized during a certain period of time ranging from 3 to 40 minutes, preferably from 3 to 20 minutes, and more preferably from 5 to 10 minutes.

The present invention also concerns a writing instrument, in particular a pen such as a felt-pen, a highlighter, a marker, and more advantageously it is a writing felt-pen, a coloring felt-pen, a highlighter, containing an ink composition according to the invention.

Advantageously, the writing instrument according to the present invention contains an eraser, in particular located on the cap or on the non-writing end of the writing instrument. More particularly, the eraser consists of ethylene-propylene-diene monomer (EPDM) rubber, Vulcanized Thermoplastic Elastomer (TPV) which is a blend of ethylene-propylene-diene monomer (EPDM) rubber and polypropylene (PP), ethylene-propylene rubber (EPR), poly(styrene-butadiene-styrene) (SBS), styrene ethylene butylene styrene (SEBS), natural rubber (NR), polyisoprene (IR), polyvinyl chloride, styrene-based thermoplastic elastomers including styrene-butadiene-styrene (SBS), styrene-ethylene-butylene-styrene (SEBS), styrene-ethylene-propylene-styrene (SEPS), styrene-ethylene-ethylene-propylene-styrene (SEEPS), polyether based polyurethane (PTU), and mixtures thereof.

According to a preferred embodiment, the writing instrument according to the present invention comprises:
- an axial barrel containing an ink composition, in particular an aqueous peelable ink composition, according to the invention, and
- a pen body which delivers the ink composition, in particular the aqueous peelable ink composition, stored in the axial barrel.

Another object of the present invention is a method for writing on a porous substrate, comprising the step of applying an ink composition according to the invention to a porous substrate, preferably comprising cellulose fibers, and more preferably chosen in the group consisting of paper, printer paper or cardboard. The method for writing on a porous substrate may further comprise the step of erasing by peeling the writing, preferably by peeling the writing with a finger or with a friction body wherein the friction body is an eraser or a tissue, said first and second colors being different from each other, in order to erase the writing (if absence of dye in the ink composition) or to change the initial color (first color) of the writing mark into another color (second color) (if presence of dye in the ink composition). Hence, in case of absence of dye(s) in the ink composition, the second color is colorless, in particular as the color of the ink deposit is removed (the writing is erased).

Finally, another object of the present invention concerns a porous substrate coated with an ink composition, in particular an aqueous peelable ink composition, according to the present invention, wherein the substrate is preferably chosen in the group consisting of paper, printer paper, or cardboard.

In addition to the foregoing, the invention also comprises other provisions which will emerge from the additional description which follows, which relates to the preparation of ink compositions, in particular aqueous peelable ink compositions, according to the present invention and comparative examples.

### Examples:

### Example 1: preparation of an aqueous peelable ink composition according to the invention

An aqueous peelable ink composition according to the present invention comprising the ink ingredients of Table 1 was prepared.

**Table 1:**

| **Trade name** | **Chemical name** | **% by weight** |
|---|---|---|
| Water | | 13.45% |
| Zetpol^{®} 2230LX | HNBR (dry extract: 40.5%) | 22% (8.9% of pure HNBR) |
| Europrene^{®} Latice 084 | SBR (dry extract: 41%) | 22% (9.02% of pure SBR) |
| Urea | Urea | 15% |
| Glycerin | Glycerin | 18% |
| Acticide PHE | Phenoxyethanol | 0.95% |
| Sanolin^{®} Rhodamine B02 | Acid red 52 | 0.60% |
| Jetsperse AQ Blue 15:3 Dispersion | Piqment dispersion | 8% |
| **Total** | | **100%** |

For a preparation of 1 kg, 134.5 g of water were introduced at room temperature in a dissolver DISPERMAT^{®} LC75 (dissolver disc Ø 60 mm), and 6 g of Sanolin^{®} Rhodamine B02 (Clariant) were added under agitation (stirring speed: 500 rpm). Then, 220 g of Zetpol^{®} 2230LX (Zeon Corporation) were added at the same stirring speed. The % of solid HNBR in Zetpol^{®} 2230LX (Zeon Corporation) represents 40.5% (dry extract), and the % of solid HNBR in the final ink composition is thus of 8.9% by weight. Then, 220 g of Europrene^{®} Latice 084 (Versalis) were added at the same stirring speed. The % of solid SBR in Europrene^{®} Latice 084 (Versalis) represents 41% (dry extract), and the % of solid SBR in the final ink composition is thus of 9.02% by weight. After 5 minutes, 180 g of glycerin (OLEON) were introduced. After 5 minutes under the same stirring speed, 150 g of urea (Brenntag) were added. After 5 minutes under the same stirring speed, 80 g of a blue pigmented dispersion Jetsperse AQ Blue 15:3 Dispersion (Sun Chemical) were added. The mixture was stirred for 5 minutes more. Then, 9.5 g of Acticide PHE were added, and the mixture was stirred for 15 minutes more to obtain the final ink composition.

The viscosity of the aqueous peelable ink composition was measured at 20°C with a Shell Cup # 1 marketed by NORCROSS^{®} Corporation, according to the following procedure:
1. Dip the Shell Cup in the ink composition until the cup is completely filled with ink composition.
2. Take the Shell Cup out of the fluid and start the timer simultaneously.
3. Stop the timer as soon as the fluid does not flow out any more. The time displayed on timer is reported as the Shell Cup viscosity at 20°C of the fluid.
4. Clean and dry the Shell Cup.
5. Repeat steps 1 to 5 with the same fluid two times.
6. Report the average viscosity of the three measures.
7. Store the Shell Cup at 20°C.

The viscosity of the aqueous peelable ink composition of example 1 measured according to this procedure was: 4.84 mPa.s.

### Example 2: preparation of an aqueous peelable ink composition according to the invention

An aqueous peelable ink composition according to the present invention comprising the ink ingredients of Table 2 was prepared.

**Table 2:**

| **Trade name** | **Chemical name** | **% by weight** |
|---|---|---|
| Water | | 13.45% |
| Zetpol^{®} 2230LX | HNBR (dry extract: 40.5%) | 11% (4.46% of pure HNBR) |
| Europrene^{®} Latice 084 | SBR (dry extract: 41%) | 33% (13.53% of pure SBR) |
| Urea | Urea | 15% |
| Glycerin | Glycerin | 18% |
| Acticide PHE | Phenoxyethanol | 0.95% |
| Sanolin^{®} Rhodamine B02 | Acid red 52 | 0.60% |
| Jetsperse AO Blue 15:3 Dispersion | Piqment dispersion | 8% |
| **Total** | | **100%** |

For a preparation of 1 kg, 134.5 g of water were introduced at room temperature in a dissolver DISPERMAT^{®} LC75 (dissolver disc Ø 60 mm), and 6 g of Sanolin^{®} Rhodamine B02 (Clariant) were added under agitation (stirring speed: 500 rpm). Then, 110 g of Zetpol^{®} 2230LX (Zeon Corporation) were added at the same stirring speed. The % of solid HNBR in Zetpol^{®} 2230LX (Zeon Corporation) represents 40.5% (dry extract), and the % of solid HNBR in the final ink composition is thus of 4.46% by weight. Then, 330 g of Europrene^{®} Latice 084 (Versalis) were added at the same stirring speed. The % of solid SBR in Europrene^{®} Latice 084 (Versalis) represents 41% (dry extract), and the % of solid SBR in the final ink composition is thus of 13.53% by weight. After 5 minutes, 180 g of glycerin (OLEON) were introduced. After 5 minutes under the same stirring speed, 150 g of urea (Brenntag) were added. After 5 minutes under the same stirring speed, 80 g of a blue pigmented dispersion Jetsperse AQ Blue 15:3 Dispersion (Sun Chemical) were added. The mixture was stirred for 5 minutes more. Then, 9.5 g of Acticide PHE were added, and the mixture was stirred for 15 minutes more to obtain the final ink composition.

The viscosity of the aqueous peelable ink composition was measured at 20°C with a Shell Cup # 1 marketed by NORCROSS^{®} Corporation, according to the same procedure as described in example 1.

The viscosity of the aqueous peelable ink composition of example 2 measured according to this procedure was: 5.5 mPas.

### Example 3: preparation of a comparative aqueous peelable ink composition (without HNBR)

A comparative aqueous peelable ink composition comprising the ink ingredients of Table 3 was prepared.

**Table 3:**

| **Trade name** | **Chemical name** | **% by weight** |
|---|---|---|
| Water | | 13.45% |
| Europrene^{®} Latice 084 | SBR (dry extract: 41%) | 44% (18.04% of pure SBR) |
| Urea | Urea | 15% |
| Glycerin | Glycerin | 18% |
| Acticide PHE | Phenoxyethanol | 0.95% |
| Sanolin^{®} Rhodamine B02 | Acid red 52 | 0.60% |
| Jetsperse AQ Blue 15:3 Dispersion | Piqment dispersion | 8% |
| **Total** | | **100%** |

For a preparation of 1 kg, 134.5 g of water were introduced at room temperature in a dissolver DISPERMAT^{®} LC75 (dissolver disc Ø 60 mm), and 6 g of Sanolin^{®} Rhodamine B02 (Clariant) were added under agitation (stirring speed: 500 rpm). Then, 440 g of Europrene^{®} Latice 084 (Versalis) were added at the same stirring speed. The % of solid SBR in Europrene^{®} Latice 084 (Versalis) represents 41% (dry extract), and the % of solid SBR in the final ink composition is thus of 18.04% by weight. After 5 minutes, 180 g of glycerin (OLEON) were introduced. After 5 minutes under the same stirring speed, 150 g of urea (Brenntag) were added. After 5 minutes under the same stirring speed, 80 g of a blue pigmented dispersion Jetsperse AQ Blue 15:3 Dispersion (Sun Chemical) were added. The mixture was stirred for 5 minutes more. Then, 9.5 g of Acticide PHE were added, and the mixture was stirred for 15 minutes more to obtain the final ink composition.

The viscosity of the aqueous peelable ink composition was measured at 20°C with a Shell Cup # 1 marketed by NORCROSS^{®} Corporation, according to the same procedure as described in example 1.

The viscosity of the aqueous peelable ink composition of example 3 measured according to this procedure was: 5.02 mPa.s.

### Example 4: preparation of a comparative aqueous peelable ink composition (with NBR and SBR)

A comparative aqueous peelable ink composition comprising the ink ingredients of Table 4 was prepared.

**Table 4:**

| **Trade name** | **Chemical name** | **% by weight** |
|---|---|---|
| Water | | 21.85% |
| Nipol^{®} LX531B | NBR (dry extract: 66%) | 13.60% (8.98% of pure NBR) |
| Europrene^{®} Latice 084 | SBR (dry extract: 41%) | 22% (9.02% of pure SBR) |
| Urea | Urea | 15% |
| Glycerin | Glycerin | 18% |
| Acticide PHE | Phenoxyethanol | 0.95% |
| Sanolin^{®} Rhodamine B02 | Acid red 52 | 0.60% |
| Jetsperse AO Blue 15:3 Dispersion | Piqment dispersion | 8% |
| **Total** | | **100%** |

For a preparation of 1 kg, 218.5 g of water were introduced at room temperature in a dissolver DISPERMAT^{®} LC75 (dissolver disc ø 60 mm), and 6 g of Sanolin^{®} Rhodamine B02 (Clariant) were added under agitation (stirring speed: 500 rpm). Then, 136 g of Nipol^{®} LX531B(Zeon Corporation) were added at the same stirring speed. The % of solid NBR in Nipol^{®} LX531B(Zeon Corporation) represents 66% (dry extract), and the % of solid NBR in the final ink composition is thus of 8.98% by weight. Then, 220 g of Europrene^{®} Latice 084 (Versalis) were added at the same stirring speed. The % of solid SBR in Europrene^{®} Latice 084 (Versalis) represents 41% (dry extract), and the % of solid SBR in the final ink composition is thus of 9.02 %by weight. After 5 minutes, 180 g of glycerin (OLEON) were introduced. After 5 minutes under the same stirring speed, 150 g of urea (Brenntag) were added. After 5 minutes under the same stirring speed, 80 g of a blue pigmented dispersion Jetsperse AQ Blue 15:3 Dispersion (Sun Chemical) were added. The mixture was stirred for 5 minutes more. Then, 9.5 g of Acticide PHE were added, and the mixture was stirred for 15 minutes more to obtain the final ink composition.

The viscosity of the aqueous peelable ink composition was measured at 20°C with a Shell Cup # 1 marketed by NORCROSS^{®} Corporation, according to the same procedure as described in example 1.

The viscosity of the aqueous peelable ink composition of example 4 measured according to this procedure was: 3.91 mPa.s

### Example 5: erasability (peelability) performances of the prepared aqueous peelable ink compositions

### Erasabilityperformance: Measurement of erasing efficiency

The erasing efficiency of the first color is the ability of the eraser to peel correctly the written mark and erase the first color applied on a porous substrate (calligraph notebook: Calligraphe LIGNE 7000, 70g.m⁻², 210 x 297 mm, 80 pages, by Clairefontaine), assessed according to the following method at 23°C and 50% relative humidity.

The written mark was peeled (or rubbed) with an eraser, i.e. polyether based polyurethane (PTU), just after writing (around 10 seconds after writing), to peel the initial color of the written mark and allows it to change from initial color 1 which corresponds to the initial color of the written mark before being peeled (or rubbed) with an eraser (here color 1: blue) into a second color 2 which corresponds to the second color of the written mark after being peeled (or rubbed) with an eraser (here color 2: magenta). Hence, the initial color 1 (here color 1: blue) is removed by peeling with the eraser.

The method is as follow:
Loops were drawn with a pen on the porous substrate, and then peeled in one time back and forth.

The erasing efficiency is visually assessed by evaluating the quality of the second color obtained after peeling by comparing it with the color of the written mark made with a control sample. The control sample has been realized with the ink composition of example 1 without the pigment dispersion.

Hence, the color of the written mark of the control sample corresponds to the target to be achieved as it corresponds to the written mark of the second color obtained without any peeling step.

The scoring (color quality of the written mark after peeling, here color 2: magenta) is defined as follows:
5: The color of the written mark after applying on the porous substrate (and after peeling) is the same as the written mark made with the control sample (i.e. it means that the first color has been completely removed).
6-10: The color of the written mark after applying on the porous substrate (and after peeling) is darker than the written mark made with the control sample (i.e. it means that part of the initial blue color remains and the obtained second magenta color is darker than the magenta color of the control sample).
0-4: The color of the written mark after applying on the porous substrate (and after peeling) is lighter than the written mark made with the control sample (i.e. it means that part of the dye has been removed while peeling the deposit and the obtained second magenta color is lighter (and less vivid) than the magenta color of the control sample.

The results are indicated in Table 5 below.

### Easiness of the erasability (peelability): Measurement of pressure

The requested pressure to erase (or to peel) the initial color by rubbing the written mark applied on a porous substrate (calligraph notebook: Calligraphe LIGNE 7000, 70g.m⁻², 210 x 297 mm, 80 pages, by Clairefontaine) was assessed by using the following method at 23°C and 50% relative humidity.

The written mark was rubbed (or peeled) with an eraser, i.e. polyether based polyurethane (PTU), just after writing (around 10 seconds after writing), to erase the written mark.

Hence, the written mark changes from the initial color (here color 1: blue) into a second color (here color 2: magenta).

The method is as follows:
A line of loops was rubbed, from one side to the other with diagonal movements, by increasing progressively the erasing pressure.

The pressure required was assessed in order to get a satisfactory erasing (or peeling) of the initial color.

The scoring (easiness of the erasing by peeling of the written mark of color 1) is defined as follows:
10: Too light pressure is requested to peel color 1 of the written mark (unwanted erasing may happened and could be for example unacceptable for left-handed).
6-9: Light pressure is requested to peel color 1 of the written mark.
5: Medium pressure is requested to peel color 1 of the written mark.
1-4: Strong pressure is requested to peel color 1 of the written mark.
0: Very strong pressure is requested to peel color 1 of the written mark.

The results are indicated in Table 5 below.

**Table 5: comparison of the erasability (peelability) performances of the ink compositions of the invention (examples 1 and 2) with the comparative ink compositions (example 3, 4)**

| Ink compositions | Color quality of the second color after peeling (color 2: magenta) | Pressure requirement (easiness of the erasing of color 1) |
|---|---|---|
| Example 1 (invention) | 5 | 8 |
| Example 2 (invention) | 5 | 9 |
| Example 3 (comparative example) | 5 | 10 |
| Example 4 (comparative example) | 6 | 9 |

As shown in Table 5, the written mark of the ink compositions according to the invention (examples 1 and 2) exhibit good results in terms of color quality of the second color after peeling, in terms of easiness of erasing (low pressure needed) to rub the color 1. Indeed, the ink compositions according to the invention (examples 1 and 2) exhibit good efficiency of the erasing by peeling (the initial color 1 of the written mark was efficiently removed). Indeed, the second color obtained after peeling with the ink compositions according to the invention (examples 1 and 2) is the same as the color of the control sample. Comparatively, the written mark obtained with the comparative ink composition of example 3 can be peeled too easily and therefore may be involuntarily erased.

The first color of the written mark made, with the comparative ink composition of example 4 cannot be erased efficiently indeed the resulting color 2 is darker than the magenta color of the control sample.

In addition, the composition according to the invention (examples 1 and 2) exhibit good results in terms of cap-off time, in particular more than one day.

## Claims

1. An ink composition comprising:
(a) at least a first film-forming elastomeric polymer,
(b) at least a second film-forming elastomeric polymer,
(c) at least one pigment, and
(d) water,
wherein the first film-forming elastomeric polymer (a) is hydrogenated acrylonitrile butadiene rubber (HNBR), and wherein the second film-forming elastomeric polymer (b) is styrene butadiene rubber (SBR).

2. An ink composition according to claim 1, wherein the weight ratio of the hydrogenated acrylonitrile butadiene rubber (a) / the styrene butadiene rubber (b) is ranging from 1:5 to 5:1, in particular from 1:4 to 3:1.

3. An ink composition according to claim 1 or 2, wherein the total content of film-forming elastomeric polymers represents at least 8% by weight, preferably at least 12% by weight, more preferably at least 16% by weight, relative to the total weight of the ink composition.

4. An ink composition according to any one of claims 1 to 3, wherein the total content of the film-forming elastomeric polymer (b) ranges from 3 to 25% by weight, preferably ranges from 6 to 20% by weight, relative to the total weight of the ink composition.

5. An ink composition according to any one of claims 1 to 4, wherein the pigment (c) is a pigment dispersion, preferably chosen in the group consisting of pigment black 7, pigment blue 15:3, pigment red, pigment green 7, and mixtures thereof, and more preferably chosen in the group consisting of pigment black 7, pigment blue 15:3, and mixtures thereof.

6. An ink composition according to any one of claims 1 to 5, wherein the total content of pigment dispersion (c) ranges from 0.1 to 10% by weight, and preferably from 0.5 to 9% by weight, relative to the total weight of the ink composition.

7. An ink composition according to any one of claims 1 to 6, wherein the total content of water (d) ranges from 10 to 80% by weight, preferably from 10 to 70% by weight, relative to the total weight of the ink composition.

8. An ink composition according to any one of claims 1 to 7, wherein the composition further comprises at least one dye.

9. An ink composition according to claim 8, wherein the total content of the at least one dye ranges from 0.1 to 10% by weight, and preferably from 0.2 to 8% by weight, and in particular from 0.3 to 5% by weight, relative to the total weight of the ink composition.

10. An ink composition according to any one of claims 1 to 9, wherein the composition further comprises at least one plasticizer.

11. An ink composition according to claim 10, wherein the plasticizer is chosen in the group consisting of alcohols, benzoate esters, diisobutyrate esters such as trimethyl pentanyl diisobutyrate, and mixtures thereof, preferably glycerin and more preferably in a content ranging from 1 to 25% by weight, relative to the total weight of the ink composition.

12. An ink composition according to any one of claims 1 to 11, wherein the composition further comprises at least one additive selected from the group consisting of antimicrobial agents, antifungal agents, dispersing agents, wetting agents, pH regulators such as urea, and mixtures thereof.

13. An ink composition according to any one of claims 1 to 12, further comprising urea and/or urea derivative(s), preferably chosen among alkylene urea derivative(s) and/or thio urea derivative(s) and mixtures thereof.

14. A method for preparing an ink composition according to any one of claims 1 to 13, comprising the steps of:
(i) under stirring, adding the at least first film-forming elastomeric polymer (a) and the at least second film-forming elastomeric polymer (b), and the optional dye, to water (d),
(ii) under stirring, adding the at least one pigment (c), and the optional at least one plasticizer, to the mixture obtained in step (i), and
(iii) under stirring, adding the optional additives to the mixture obtained in step (ii).

15. A writing instrument containing an ink composition according to any one of claims 1 to 13, wherein the writing instrument is a pen advantageously chosen in the group consisting of a felt-pen, a highlighter, a marker, and more advantageously a writing felt-pen, a coloring felt-pen, a highlighter, optionally wherein the writing instrument comprises an eraser, advantageously located on the cap or on the non-writing end of the writing instrument.

16. A method for writing on a porous substrate, comprising the step of applying an ink composition according to any one of claims 1 to 13 to a porous substrate, preferably chosen in the group consisting of paper, printer paper, or cardboard, more specifically further comprising the step of changing the initial color (first color) of the written mark into another color (second color) by peeling, advantageously by peeling the written mark with a finger or with a friction body wherein the friction body is an eraser or a tissue.

## Patentansprüche

1. Tintenzusammensetzung, umfassend:
(a) mindestens ein erstes filmbildendes elastomeres Polymer,
(b) mindestens ein zweites filmbildendes elastomeres Polymer,
(c) mindestens ein Pigment und
(d) Wasser,
wobei das erste filmbildende elastomere Polymer (a) hydrierter Acrylnitril-Butadien-Kautschuk (HNBR) ist und wobei das zweite filmbildende elastomere Polymer (b) Styrol-Butadien-Kautschuk (SBR) ist.

2. Tintenzusammensetzung nach Anspruch 1, wobei das Gewichtsverhältnis des hydrierten Acrylnitril-Butadien-Kautschuks (a) /dem Styrol-Butadien-Kautschuk (b) von 1 : 5 bis 5 : 1, insbesondere von 1 : 4 bis 3 : 1 reicht.

3. Tintenzusammensetzung nach Anspruch 1 oder 2, wobei der Gesamtgehalt an filmbildenden elastomeren Polymeren bezogen auf das Gesamtgewicht der Tintenzusammensetzung mindestens 8 Gew.-%, vorzugsweise mindestens 12 Gew.-%, mehr bevorzugt mindestens 16 Gew.-% beträgt.

4. Tintenzusammensetzung nach einem der Ansprüche 1 bis 3, wobei der Gesamtgehalt des filmbildenden elastomeren Polymers (b) bezogen auf das Gesamtgewicht der Tintenzusammensetzung von 3 bis 25 Gew.-% reicht, vorzugsweise von 6 bis 20 Gew.-% reicht.

5. Tintenzusammensetzung nach einem der Ansprüche 1 bis 4, wobei das Pigment (c) eine Pigmentdispersion ist, vorzugsweise ausgewählt aus der Gruppe bestehend aus Pigment Black 7, Pigment Blue 15 : 3, Pigment Red, Pigment Green 7 und Mischungen davon, und mehr bevorzugt ausgewählt aus der Gruppe bestehend aus Pigment Black 7, Pigment Blue 15 : 3 und Mischungen davon.

6. Tintenzusammensetzung nach einem der Ansprüche 1 bis 5, wobei der Gesamtgehalt an Pigmentdispersion (c) bezogen auf das Gesamtgewicht der Tintenzusammensetzung von 0,1 bis 10 Gew.-% und vorzugsweise von 0,5 bis 9 Gew.-% reicht.

7. Tintenzusammensetzung nach einem der Ansprüche 1 bis 6, wobei der Gesamtgehalt an Wasser (d) bezogen auf das Gesamtgewicht der Tintenzusammensetzung von 10 bis 80 Gew.-%, vorzugsweise von 10 bis 70 Gew.-% reicht.

8. Tintenzusammensetzung nach einem der Ansprüche 1 bis 7, wobei die Zusammensetzung ferner mindestens einen Farbstoff umfasst.

9. Tintenzusammensetzung nach Anspruch 8, wobei der Gesamtgehalt des mindestens einen Farbstoffs bezogen auf das Gesamtgewicht der Tintenzusammensetzung von 0,1 bis 10 Gew.-% und vorzugsweise von 0,2 bis 8 Gew.-% und insbesondere von 0,3 bis 5 Gew.-% reicht.

10. Tintenzusammensetzung nach einem der Ansprüche 1 bis 9, wobei die Zusammensetzung ferner mindestens einen Weichmacher umfasst.

11. Tintenzusammensetzung nach Anspruch 10, wobei der Weichmacher ausgewählt ist aus der Gruppe bestehend aus Alkoholen, Benzoatestern, Diisobutyratestern wie Trimethylpentanyldiisobutyrat und Mischungen davon, vorzugsweise Glycerin und mehr bevorzugt in einem Gehalt, der bezogen auf das Gesamtgewicht der Tintenzusammensetzung von 1 bis 25 Gew.-% reicht.

12. Tintenzusammensetzung nach einem der Ansprüche 1 bis 11, wobei die Zusammensetzung ferner mindestens einen Zusatzstoff umfasst, gewählt aus der Gruppe bestehend aus antimikrobiellen Mitteln, Antimykotika, Dispergiermitteln, Benetzungsmitteln, pH-Wert-Regulatoren wie Harnstoff und Mischungen davon.

13. Tintenzusammensetzung nach einem der Ansprüche 1 bis 12, ferner umfassend Harnstoff und/oder Harnstoffderivat(e), vorzugsweise ausgewählt aus Alkylenharnstoffderivat(en) und/oder Thioharnstoffderivat(en) und Mischungen davon.

14. Verfahren zum Herstellen einer Tintenzusammensetzung nach einem der Ansprüche 1 bis 13, umfassend die Schritte:
(i) unter Rühren, Zugeben des mindestens ersten filmbildenden elastomeren Polymers (a) und des mindestens zweiten filmbildenden elastomeren Polymers (b) und des optionalen Farbstoffs zu Wasser (d),
(ii) unter Rühren, Zugeben des mindestens einen Pigments (c) und des optionalen mindestens einen Weichmachers zu der in Schritt (i) erhaltenen Mischung und,
(iii) unter Rühren, Zugeben der optionalen Zusatzstoffe zu der in Schritt (ii) erhaltenen Mischung.

15. Schreibgerät, das eine Tintenzusammensetzung nach einem der Ansprüche 1 bis 13 enthält, wobei das Schreibgerät ein Stift ist, vorteilhafterweise ausgewählt aus der Gruppe bestehend aus einem Filzstift, einem Leuchtstift, einem Marker, und vorteilhafter einem Schreibfilzstift, einem Farbfilzstift, einem Leuchtstift, wobei das Schreibgerät optional einen Radierer umfasst, der vorteilhafterweise an der Kappe oder an dem nicht schreibenden Ende des Schreibgeräts angeordnet ist.

16. Verfahren zum Schreiben auf einem porösen Substrat, umfassend den Schritt des Auftragens einer Tintenzusammensetzung nach einem der Ansprüche 1 bis 13 auf ein poröses Substrat, vorzugsweise ausgewählt aus der Gruppe bestehend aus Papier, Druckerpapier oder Karton, spezifischer ferner umfassend den Schritt des Änderns der ursprünglichen Farbe (ersten Farbe) der geschriebenen Markierung in eine andere Farbe (zweite Farbe) durch Abziehen, vorteilhafterweise durch Abziehen der geschriebenen Markierung mit einem Finger oder mit einem Reibungskörper, wobei der Reibungskörper ein Radierer oder ein Gewebe ist.

## Revendications

1. Composition d'encre comprenant :
(a) au moins un premier polymère élastomère filmogène,
(b) au moins un second polymère élastomère filmogène,
(c) au moins un pigment, et
(d) de l'eau,
dans laquelle le premier polymère élastomère filmogène (a) est du caoutchouc acrylonitrile butadiène hydrogéné (HNBR), et dans laquelle le second polymère élastomère filmogène (b) est du caoutchouc butadiène-styrène (SBR).

2. Composition d'encre selon la revendication 1, dans laquelle le rapport pondéral du caoutchouc acrylonitrile butadiène hydrogéné (a) /au caoutchouc butadiène-styrène (b) va de 1:5 à 5:1, en particulier de 1:4 à 3:1.

3. Composition d'encre selon la revendication 1 ou 2, dans laquelle la teneur totale en polymère élastomère filmogène représente au moins 8 % en poids, de préférence au moins 12 % en poids, plus préférablement au moins 16 % en poids, par rapport au poids total de la composition d'encre.

4. Composition d'encre selon l'une quelconque des revendications 1 à 3, dans laquelle la teneur totale en polymère élastomère filmogène (b) va de 3 à 25 % en poids, va de préférence de 6 à 20 % en poids, par rapport au poids total de la composition d'encre.

5. Composition d'encre selon l'une quelconque des revendications 1 à 4, dans laquelle le pigment (c) est une dispersion de pigment, de préférence choisie dans le groupe constitué par pigment noir 7, pigment bleu 15:3, pigment rouge, pigment vert 7, et mélanges de ceux-ci, et plus préférablement choisie dans le groupe constitué par pigment noir 7, pigment bleu 15:3, et mélanges de ceux-ci.

6. Composition d'encre selon l'une quelconque des revendications 1 à 5, dans laquelle la teneur totale en dispersion de pigment (c) va de 0,1 à 10 % en poids, et de préférence de 0,5 à 9 % en poids, par rapport au poids total de la composition d'encre.

7. Composition d'encre selon l'une quelconque des revendications 1 à 6, dans laquelle la teneur totale en eau (d) va de 10 à 80 % en poids, de préférence de 10 à 70 % en poids, par rapport au poids total de la composition d'encre.

8. Composition d'encre selon l'une quelconque des revendications 1 à 7, la composition comprenant en outre au moins un colorant.

9. Composition d'encre selon la revendication 8, dans laquelle la teneur totale en l'au moins un colorant va de 0,1 à 10 % en poids, et de préférence de 0,2 à 8 % en poids, et en particulier de 0,3 à 5 % en poids, par rapport au poids total de la composition d'encre.

10. Composition d'encre selon l'une quelconque des revendications 1 à 9, la composition comprenant en outre au moins un plastifiant.

11. Composition d'encre selon la revendication 10, dans laquelle le plastifiant est choisi dans le groupe constitué par alcools, esters benzoate, esters diisobutyrate tels que diisobutyrate de triméthyl-pentanyle, et mélanges de ceux-ci, de préférence glycérine et plus préférablement en une teneur allant de 1 à 25 % en poids, par rapport au poids total de la composition d'encre.

12. Composition d'encre selon l'une quelconque des revendications 1 à 11, la composition comprenant en outre au moins un additif choisi dans le groupe constitué par agents antimicrobiens, agents antifongiques, agents de dispersion, agents mouillants, régulateurs de pH tels que de l'urée, et mélanges de ceux-ci.

13. Composition d'encre selon l'une quelconque des revendications 1 à 12, comprenant en outre de l'urée et/ou un ou plusieurs dérivé(s) d'urée, de préférence choisi(s) parmi dérivé(s) d'alkylène-urée et/ou dérivé(s) de thio-urée et mélanges de ceux-ci.

14. Procédé permettant de préparer une composition d'encre selon l'une quelconque des revendications 1 à 13, comprenant les étapes consistant à :
(i) sous agitation, ajouter l'au moins un premier polymère élastomère filmogène (a) et l'au moins un second polymère élastomère filmogène (b), et le colorant facultatif, à de l'eau (d),
(ii) sous agitation, ajouter l'au moins un pigment (c), et l'au moins un plastifiant facultatif, au mélange obtenu à l'étape (i), et
(iii) sous agitation, ajouter les additifs facultatifs au mélange obtenu à l'étape (ii).

15. Instrument d'écriture contenant une composition d'encre selon l'une quelconque des revendications 1 à 13, l'instrument d'écriture étant un stylo avantageusement choisi dans le groupe constitué par un stylo-feutre, un surligneur, un marqueur, et plus avantageusement un stylo-feutre d'écriture, un stylo-feutre de coloriage, un surligneur, facultativement l'instrument d'écriture comprenant une gomme, avantageusement localisée sur le capuchon ou sur l'extrémité de non-écriture de l'instrument d'écriture.

16. Procédé d'écriture sur un substrat poreux, comprenant l'étape d'application d'une composition d'encre selon l'une quelconque des revendications 1 à 13 à un substrat poreux, choisi de préférence dans le groupe constitué par papier, papier d'imprimante, ou carton, plus spécifiquement comprenant en outre l'étape consistant à changer la couleur initiale (première couleur) de la marque écrite en une autre couleur (seconde couleur) par pelage, avantageusement en pelant la marque écrite avec un doigt ou avec un corps de frottement dans lequel le corps de frottement est une gomme ou un papier absorbant.
